(19) Europäisches Patentamt
European Patent Office
Office européen des brevets

(11) **EP 1 976 740 B1**

(12) **EUROPÄISCHE PATENTSCHRIFT**

(45) Veröffentlichungstag und Bekanntmachung des Hinweises auf die Patenterteilung:
**18.08.2010   Patentblatt 2010/33**

(21) Anmeldenummer: **07702777.9**

(22) Anmeldetag: **16.01.2007**

(51) Int Cl.:
*B60W 20/00* (2006.01)        *B60K 6/20* (2007.10)
*B60W 10/02* (2006.01)        *B60W 10/08* (2006.01)

(86) Internationale Anmeldenummer:
**PCT/EP2007/000313**

(87) Internationale Veröffentlichungsnummer:
**WO 2007/085362 (02.08.2007 Gazette 2007/31)**

(54) **VERFAHREN ZUR STEUERUNG EINES KRAFTFAHRZEUG-ANTRIEBSSTRANGS**

METHOD FOR CONTROLLING A MOTOR VEHICLE DRIVE TRAIN

PROCEDE DE COMMANDE D'UNE CHAINE CINEMATIQUE DE VEHICULE A MOTEUR

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **26.01.2006   DE 102006003711**

(43) Veröffentlichungstag der Anmeldung:
**08.10.2008   Patentblatt 2008/41**

(73) Patentinhaber: **ZF Friedrichshafen AG**
**88038 Friedrichshafen (DE)**

(72) Erfinder:
• **WALLNER, Stefan**
**5163 Mattsee (AT)**
• **AMANN, Notker**
**88045 Friedrichshafen (DE)**

(56) Entgegenhaltungen:
**EP-A- 1 090 792        EP-A1- 1 319 546**
**US-A- 5 775 449        US-A1- 2004 060 753**
**US-A1- 2005 082 098**

## Beschreibung

Die Erfindung betrifft ein Verfahren zur Steuerung eines Kraftfahrzeug-Antriebsstrangs, der einen Verbrennungsmotor, eine Elektromaschine und ein Getriebe umfasst, die über ein Summierungsgetriebe mit zwei Eingangselementen und einem Ausgangselement sowie über eine als Reibungskupplung ausgebildete Überbrückungskupplung miteinander gekoppelt sind, in dem das erste Eingangselement mit der Kurbelwelle des Verbrennungsmotors, das zweite Eingangselement mit dem Rotor der Elektromaschine, und das Ausgangselement mit der Eingangswelle des Getriebes drehfest verbunden ist, und bei dem die Überbrückungskupplung zwischen zwei Elementen des Summierungsgetriebes angeordnet ist, wobei vor einem Schaltvorgang die Drehmomente des Verbrennungsmotors und der Elektromaschine abgebaut werden und die Überbrückungskupplung geöffnet wird.

Ein Antriebsstrang eines Kraftfahrzeugs der vorbezeichneten Art ist aus der DE 199 34 696 A1 und der DE 101 52 471 A1 bekannt. In diesem bekannten Antriebsstrang ist das Summierungsgetriebe jeweils als ein einfaches Planetengetriebe mit einem Sonnenrad, einem Planetenträger mit mehreren Planetenrädern und einem Hohlrad ausgebildet. Das Hohlrad bildet das erste Eingangselement und ist drehfest mit der Kurbelwelle des Verbrennungsmotors verbunden. Das Sonnenrad bildet das zweite Eingangselement und ist drehfest mit dem Rotor der Elektromaschine gekoppelt. Der Planetenträger bildet das Ausgangselement und ist drehfest mit der Eingangswelle des Schaltgetriebes verbunden. Die Überbrückungskupplung ist jeweils zwischen dem Sonnenrad und dem Planetenträger des Planetengetriebes angeordnet.

In dem Antriebsstrang nach der DE 199 34 696 A1 ist die Überbrückungskupplung im Gegensatz zur vorliegend vorausgesetzten Ausbildung als Klauenkupplung ausgebildet, so dass die Überbrückungskupplung nur bei Synchronlauf des Verbrennungsmotors und der Eingangswelle des Schaltgetriebes geschlossen werden kann und somit nur eingeschränkt nutzbar ist. Um einen Antrieb des Kraftfahrzeugs allein mit der Elektromaschine zu ermöglichen, ist ein Richtungsfreilauf zwischen der Kurbelwelle und einem Gehäuseteil angeordnet, wodurch die Kurbelwelle gegen ein Rückwärtsdrehen gesichert und damit das Antriebsmoment der Elektromaschine gegen das Gehäuse abgestützt wird. Um bei stehendem Kraftfahrzeug ein Starten des Verbrennungsmotors mit der Elektromaschine zu ermöglichen, ist ein weiterer Richtungsfreilauf zwischen der Eingangswelle des Schaltgetriebes und einem Gehäuseteil angeordnet, wodurch die Eingangswelle gegen ein Rückwärtsdrehen gesichert und damit das Antriebsmoment der Elektromaschine gegen das Gehäuse abgestützt wird.

In dem Antriebsstrang nach der DE 101 52 471 A1 ist die Überbrückungskupplung, wie es für die vorliegende Erfindung vorausgesetzt wird, als Reibungskupplung ausgebildet, so dass die Überbrückungskupplung auch bei einer Drehzahldifferenz zwischen der Eingangswelle des Schaltgetriebes und dem Verbrennungsmotor zur Übertragung eines Drehmomentes im Schlupfbetrieb genutzt werden kann. Um bei stehendem Kraftfahrzeug und in Leerlauf geschaltetem Getriebe einen Impulsstart des Verbrennungsmotors mit der Elektromaschine zu ermöglichen, ist eine weitere Reibungskupplung zwischen der Eingangswelle des Schaltgetriebes und einem Gehäuseteil angeordnet, wodurch die Eingangswelle nach Erreichen einer Startdrehzahl der Elektromaschine zum Starten des Verbrennungsmotors abgebremst werden kann.

Die EP1090792 wird als nachstliegender Stand der Technik angesehen und zeigt die Merkmale der Präambel des Anspruchs 1.

Nachfolgend wird in der Beschreibung der Erfindung ohne Einschränkung des Schutzumfangs beispielhaft von einem weitgehend identischen Aufbau des Antriebsstrangs ausgegangen, wobei die Überbrückungskupplung als Reibungskupplung vorausgesetzt wird, insbesondere als nasse Lamellenkupplung, alternativ aber auch als Trockenkupplung ausgeführt sein kann. Alternativ zu der bekannten Anordnung kann die Überbrückungskupplung auch zwischen dem Hohlrad und dem Sonnenrad, also zwischen der Kurbelwelle des Verbrennungsmotors und dem Rotor der Elektromaschine angeordnet sein.

Im normalen Fahrbetrieb ist die Überbrückungskupplung vollständig geschlossen, so dass das Planetengetriebe blockiert ist und starr umläuft. In diesem Betriebszustand sind die Drehzahlen und die Drehrichtungen des Verbrennungsmotors, der Elektromaschine und der Eingangswelle des Schaltgetriebes identisch. Die Elektromaschine wird in diesem Zustand vorwiegend als Generator zur Versorgung des elektrischen Bordnetzes betrieben, kann jedoch in bestimmten Betriebssituationen, insbesondere in Beschleunigungsphasen des Kraftfahrzeugs, vorübergehend auch als Motor betrieben werden.

Ein derartiger Antriebsstrang muss beim Auftreten einer Schaltungsanforderung, die in Abhängigkeit von Betriebsparametern von einem Steuergerät automatisch oder durch die Betätigung eines Schaltbedienungselementes, wie eines Schalthebels in einer Manuellschaltgasse oder eines hinter dem Lenkrad angeordneten Schaltpaddels, durch den Fahrer manuell ausgelöst werden kann, unmittelbar vor dem Gangwechsel innerhalb des Schaltgetriebes weitgehend drehmomentfrei gemacht werden. Des Weiteren muss die Überbrückungskupplung vollständig geöffnet werden, um innerhalb des Summierungsgetriebes einen durch den Übersetzungssprung der Schaltung bedingten Drehzahlausgleich zu ermöglichen. Insgesamt wird hierdurch erreicht, dass der eingelegte Lastgang lastfrei ausgelegt und der einzulegende Zielgang lastfrei synchronisiert und nachfolgend eingelegt werden kann. Die Lastfreiheit an den betreffenden Schalt-

**EP 1 976 740 B1**

und Synchronisierelementen ermöglicht niedrige Schaltkräfte, geringen Verschleiß an den Schaltkupplungen und an den Synchronisierelementen, kurze Schaltzeiten sowie einen hohen Schaltkomfort.

Bislang ist es hierzu üblich, die Drehmomente des Verbrennungsmotors und der Elektromaschine unabhängig voneinander auf Null zu reduzieren und die Überbrückungskupplung unkoordiniert dazu zu öffnen. Aufgrund des relativ schnellen Ansprechverhaltens der Elektromaschine und der Überbrückungskupplung sowie des relativ trägen Ansprechverhaltens des Verbrennungsmotors kann dies zu unerwünschten Ausgleichsbewegungen innerhalb des Summierungsgetriebes führen, die zu unzulässig hohen Drehzahlen und trägheitsbedingt hohen Belastungen führen können.

So kann bei einer Ausbildung des Summierungsgetriebes als Planetengetriebe in der bekannten Anordnung gemäß der DE 101 52 471 A1 DE in dieser Situation eine schnell lastfrei geschaltete Elektromaschine und eine frühzeitig geöffnete Überbruckungskupplung zu einer Beschleunigung des Verbrennungsmotors in Verbindung mit einem extremen Hochdrehen der Elektromaschine in entgegengesetzter Drehrichtung führen. Hierdurch können Beschädigungen sowohl an der Elektromaschine als auch an dem Planetengetriebe auftreten. Des Weiteren wird durch die dabei im Planetengetriebe verursachten Drehzahlunterschiede die nachfolgende Synchronisierung des Zielgangs und die nach der Schaltung durchzuführende Synchronisierung zwischen dem Verbrennungsmotor und der Eingangswelle des Schaltgetriebes erschwert und verlängert.

Vor diesem Hintergrund liegt der vorliegenden Erfindung die Aufgabe zugrunde, ein Verfahren anzugeben, mit dem bei einem Antriebsstrang der eingangs genannten Art der Drehmomentabbau und die Öffnung der Überbrückungskupplung vor einem Schaltvorgang ohne Drehzahländerungen in dem Summierungsgetriebe schnellstmöglich durchführbar sind. Ein solches Verfahren soll auch in Antriebssträngen nutzbar sein, die vergleichbare Komponenten, jedoch in anderer Antriebskopplungskombination enthalten. Dabei ist zu berücksichtigen, dass sich der Verbrennungsmotor im Zug- oder Schubbetrieb befinden kann, die Überbrückungskupplung von einem vollständig geöffneten über einen teilweise geschlossenen bis in einem (mit Überanpressung) vollständig geschlossenen Zustand sein kann, und die Elektromaschine gerade als Generator oder als Motor betrieben werden, oder gerade kraftlos geschaltet sein kann.

Die Erfindung betrifft gemäß den Merkmalen des Anspruchs 1 ein Verfahren zur Steuerung eines Kraftfahrzeug-Antriebsstrangs, der einen Verbrennungsmotor, eine Elektromaschine und ein Getriebe umfasst, die über ein Summierungsgetriebe mit zwei Eingangselementen und einem Ausgangselement sowie über eine als Reibungskupplung ausgebildete Überbrückungskupplung miteinander gekoppelt sind, indem das erste Eingangselement mit der Kurbelwelle des Verbrennungsmotors, das zweite Eingangselement mit dem Rotor der Elektromaschine und das Ausgangselement mit der Eingangswelle des Getriebes drehfest verbunden ist, und bei dem die Überbrückungskupplung zwischen zwei Elementen des Summierungsgetriebes angeordnet ist, wobei vor einem Schaltvorgang die Drehmomente des Verbrennungsmotors und der Elektromaschine abgebaut werden sowie die Überbrückungskupplung geöffnet wird.

Außerdem ist bei diesem Verfahren vorgesehen, dass das Drehmoment M_VM des Verbrennungsmotors nach einem vorab festgelegten Zeitverlauf M_VM_soll = f (t) reduziert wird, dass die Überbrückungskupplung, sofern diese zu Beginn des Drehmomentabbaus zumindest teilweise geschlossen ist, an die Schlupfgrenze gebracht und nachfolgend an der Schlupfgrenze proportional zu dem sinkenden Drehmoment M_VM_ist des Verbrennungsmotors geöffnet wird, und dass das Drehmoment M_EM_soll der Elektromaschine im Verhältnis M_EM_ist / M_VM_ist der Drehmomente zu Beginn des Drehmomentabbaus proportional zu dem Drehmoment M_VM_ist des Verbrennungsmotors reduziert wird.

In diesem Zusammenhang sei darauf hingewiesen, dass unter dem Begriff "Getriebe" alle Getriebearten zu verstehend sind, die eine echte NeutralStellung mit einer Abtriebsdrehzahl "Null" haben, also nicht etwa durch eine getriebeinterne Drehzahlsummation eine Abtriebsdrehzahl mit dem Wert "Null" erzeugen. Unter dem Begriff "Getriebe" fallen daher beispielsweise Handschaltgetriebe, automatisierte Schaltgetriebe, Planeten-Automatikgetriebe und stufenlose Getriebe.

Durch den derart koordinierten Abbau der Drehmomente des Verbrennungsmotors und der Elektromaschine sowie des Öffnens der Überbrückungskupplung wird das zu Beginn des Drehmomentabbaus oder mit dem Erreichen der Schlupfgrenze durch die Überbrückungskupplung in dem Summierungsgetriebe bestehende Momentengleichgewicht bis zum Ende des Drehmomentabbaus weitgehend beibehalten, und damit auch die Drehzahlverhältnisse in dem Summierungsgetriebe konstant gehalten. Somit werden unzulässige Drehzahlen der Elemente des Summierungsgetriebes und der mit diesem verbundenen Bauteile vermieden sowie nachfolgende Synchronisierungsvorgänge erleichtert.

Aufgrund des relativ langsamen Drehmomentabbaus des Verbrennungsmotors wird dafür ein zeitlicher Verlauf M_VM_soll = f (t) vorgegeben und der Abbau des übertragbaren Drehmomentes M_K_soll der Überbrückungskupplung sowie des Drehmomentes M_EM_soll der Elektromaschine dem tatsächlichen Drehmoment M_VM_ist des Verbrennungsmotors nachgeführt.

Der wesentliche Gedanke der Erfindung besteht somit darin, dass zu Beginn des Drehmomentabbaus entweder ein Momentengleichgewicht am Summierungsgetriebe hergestellt und bis zum vollständigen Drehmomentabbau, also dem Erreichen eines Nullmomentes durch den Verbrennungsmotor, die Elektromaschine und die Überbrückungskupplung beibehalten wird, oder ein schon bestehendes Momentengleichgewicht bis zum Erreichen des Nullmomentes beibehalten wird.

Hierdurch werden, abgesehen von schwankungsbedingten Abweichungen, die z.B. durch Drehzahl- und Drehmomentschwankungen des Verbrennungsmotors verursacht werden können, die absoluten Drehzahlen und die Drehzahlverhältnisse an dem Summierungsgetriebe bis zum Ende des Drehmomentabbaus beibehalten und somit ein unerwünschtes Auseinanderlaufen der Drehzahlen der Elemente des Summierungsgetriebes vermieden. Ein derartiger Drehmomentabbau stellt im Übrigen die schnellste Möglichkeit hierzu dar.

Wenn die Überbrückungskupplung zu Beginn des Drehmomentabbaus mit Überanpressung vollständig geschlossen ist, so wird die Überbrückungskupplung zunächst bis an die Schlupfgrenze geöffnet. Danach werden das Drehmoment M_VM des Verbrennungsmotors und proportional dazu das Drehmoment M_EM der Elektromaschine reduziert sowie die Überbrückungskupplung proportional dazu weiter geöffnet, also das übertragbare Drehmoment M_K der Überbrückungskupplung proportional zu dem Drehmoment M_VM_ist des Verbrennungsmotors reduziert.

Bei teilweise geschlossener Überbrückungskupplung zu Beginn des Drehmomentabbaus kann das übertragbare Drehmoment M_K der Überbrückungskupplung zunächst konstant gehalten werden, bis durch das sinkende Drehmoment M_VM_ist des Verbrennungsmotors die Schlupfgrenze erreicht wird. Nachfolgend wird die Überbrückungskupplung dann an der Schlupfgrenze proportional zu dem Drehmoment M_VM_ist des Verbrennungsmotors geöffnet. Bei dieser Vorgehensweise können sich zwar geringe Drehzahlabweichungen in dem Summierungsgetriebe einstellen. Die Überbrückungskupplung wird damit aber auf, dem schnellsten Weg an die Schlupfgrenze geführt, und somit die mit Verschleiß und Erwärmung verbundene Schlupfphase verkürzt.

Alternativ dazu ist es bei teilweise geschlossener Überbrückungskupplung zu Beginn des Drehmomentabbaus auch möglich, das übertragbare Drehmoment M_K der Überbrückungskupplung im Verhältnis von M_K_ist / M_VM_ist zu Beginn des Drehmomentabbaus durch ein entsprechendes Öffnen proportional zu dem Drehmoment M_VM_ist des Verbrennungsmotors zu reduzieren. Hierdurch wird das Momentengleichgewicht in dem Summierungsgetriebe genau beibehalten und somit Drehzahlabweichungen vermieden. Dafür muss jedoch gegenüber der vorbeschriebenen Verfahrensvariante eine verlängerte Schlupfphase in Kauf genommen werden.

Wenn die Überbrückungskupplung zu Beginn des Drehmomentabbaus schon vollständig geöffnet ist, so verbleibt die Überbrückungskupplung während des Drehmomentabbaus in diesem Zustand.

Zur Verdeutlichung der Erfindung sind der Beschreibung Zeichnungen mit Ausführungsbeispielen beigefügt. In diesen zeigt:

Fig. 1 ein Funktionsschema des Verfahrens zum Drehmomentabbau vor einer Schaltung,

Fig. 2 einen Ablaufplan zur Steuerung des Verfahrens nach Fig. 1,

Fig. 3 ein erstes Anwendungsbeispiel zum Drehmomentabbau vor ei- ner Schaltung in Form eines Drehmomentdiagramms,

Fig. 4 ein zweites Anwendungsbeispiel zum Drehmomentabbau vor ei- ner Schaltung in Form eines Drehmomentdiagramms,

Fig. 5 ein drittes Anwendungsbeispiel zum Drehmomentabbau vor ei- ner Schaltung in Form eines Drehmomentdiagramms,

Fig. 6 ein viertes Anwendungsbeispiel zum Drehmomentabbau vor ei- ner Schaltung in Form eines Drehmomentdiagramms,

Fig. 7 den allgemeinen Aufbau eines Antriebsstranges in vereinfachter schematischer Darstellung, und

Fig. 8 eine bevorzugte praktische Ausführungsform des Antriebs- strangs gemäß Fig. 7 in schematischer Darstellung.

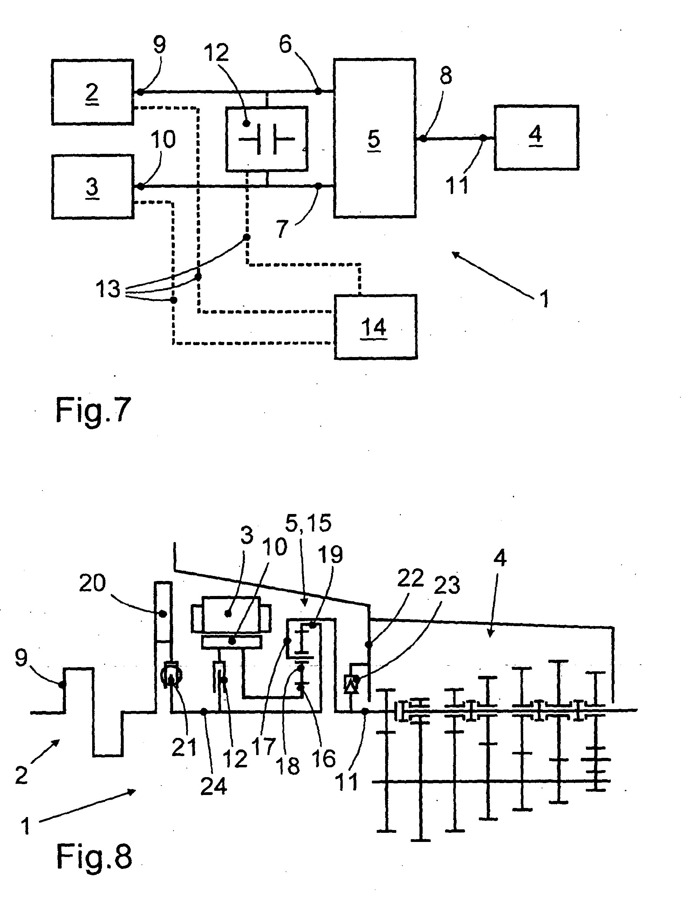

Ein Antriebsstrang 1 gemäß Fig. 7 umfasst einen Verbrennungsmotor 2, eine Elektromaschine 3 und ein Getriebe 4, die über ein Summierungsgetriebe 5 mit zwei Eingangselementen 6, 7 und einem Ausgangselement 8 miteinander gekoppelt sind. Das erste Eingangselement 6 des Summierungsgetriebes 5 ist mit der Kurbelwelle 9 des Verbrennungsmotors 2, das zweite Eingangselement 7 mit dem Rotor 10 der Elektromaschine 3 und das Ausgangselement 8 mit der Eingangswelle 11 des Getriebes 4 jeweils drehfest verbunden. Eine als Reibungskupplung ausgebildete Überbrückungskupplung 12 ist zwischen zwei Elementen des Summierungsgetriebes 5, vorliegend zwischen den beiden Eingangselementen 6, 7 angeordnet. Der Verbrennungsmotor 2, die Elektromaschine 2 und die Überbrückungskupplung 12 stehen über Sensor- und Steuerleitungen 13 mit einem Steuergerät 14 in Verbindung, über das die Komponenten des Antriebsstrangs 1 koordiniert steuerbar sind.

Eine bevorzugte praktische Ausführungsform des Antriebsstrangs 1 ist in Fig. 8 abgebildet. In diesem Antriebsstrang 1 ist das Summierungsgetriebe 5 als ein einfaches Planetengetriebe 15 mit einem Sonnenrad 16, einem Planetenträger 17 mit mehreren Planetenrädern 18 und einem Hohlrad 19 ausgebildet. Das Hohlrad 19 bildet das erste Eingangselement 6 und steht über ein Schwungrad 20 und einen Drehschwingungsdämpfer 21 mit der Kurbelwelle 9 des Verbrennungsmotors 2 in Verbindung. Das Sonnenrad 16 bildet das zweite Eingangselement 7 und ist unmittelbar mit dem Rotor 10 der Elektromaschine 3 verbunden. Der Planetenträger 17 bildet das Ausgangselement 8 und steht unmittelbar mit der Eingangswelle 11 des als automatisiertes Schaltgetriebe ausgebildeten Getriebes 4 in Verbindung. Ein zwischen der Eingangswelle 11 und einem Gehäuseteil 22 angeordneter Richtungsfreilauf 23 dient zur Abstützung der Eingangswelle 11 bei einem Starten des Verbrennungsmotors 2 durch die Elektromaschine 3.

Das Getriebe 4 ist in Vorgelegebauweise ausgeführt und weist insgesamt sechs Vorwärtsgänge sowie einen Rückwärtsgang auf, die über jeweils eine unsynchronisierte Klauenschaltkupplung selektiv schaltbar sind. Die Überbrückungskupplung 12 ist zwischen dem Rotor 10 der Elektromaschine 3 und einer Verbindungswelle 24 angeordnet, durch die der Verbrennungsmotor 2 mit dem Hohlrad 19 in Verbindung steht.

Bei einem derartigen Antriebsstrang 1 muss vor einem Schaltvorgang innerhalb des Getriebes 4 Drehmomentfreiheit an der Eingangswelle 11 hergestellt werden, damit der eingelegte Lastgang lastfrei ausgelegt und der einzulegender Zielgang lastfrei synchronisiert und eingelegt werden kann.

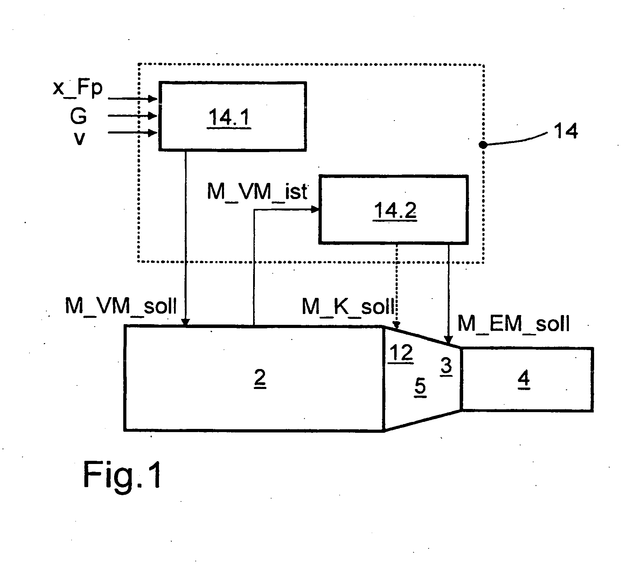

Hierzu ist gemäß dem Funktionsschema von Fig. 1 vorgesehen, dass das Drehmoment M_VM beziehungsweise M_VM_soll des Verbrennungsmotors 2 im Wesentlichen als Funktion von fahrzeug- und bedienungsabhängigen Betriebsparametern, wie der Fahrgeschwindigkeit v, dem eingelegten Gang G und der Fahrpedalstellung x_Fp, durch die Vorgabe eines Zeitverlaufes M_VM_soll = f (t) von einem Sollwertgeber 14.1 des Steuergerätes 14 abgebaut wird.

Der tatsächliche Wert des Motormomentes M_VM_ist wird einem zweiten Sollwertgeber 14.2 des Steuergerätes 14 zugeführt, von dem die Sollwerte des übertragbaren Drehmomentes M_K_soll der Überbrückungskupplung 12 und des Drehmomentes M_EM_soll der Elektromaschine 3 ermittelt werden, die damit proportional zu dem Verlauf des Verbrennungsmotormomentes M_VM_ist abgebaut werden, und zwar bei der Elektromaschine 3 durch eine entsprechende Steuerung der abgegebenen oder aufgenommenen elektrischen Leistung und bei der Überbrückungskupplung 12 durch eine entsprechende Druck- oder Wegsteuerung des Öffnungsvorgangs an derselben.

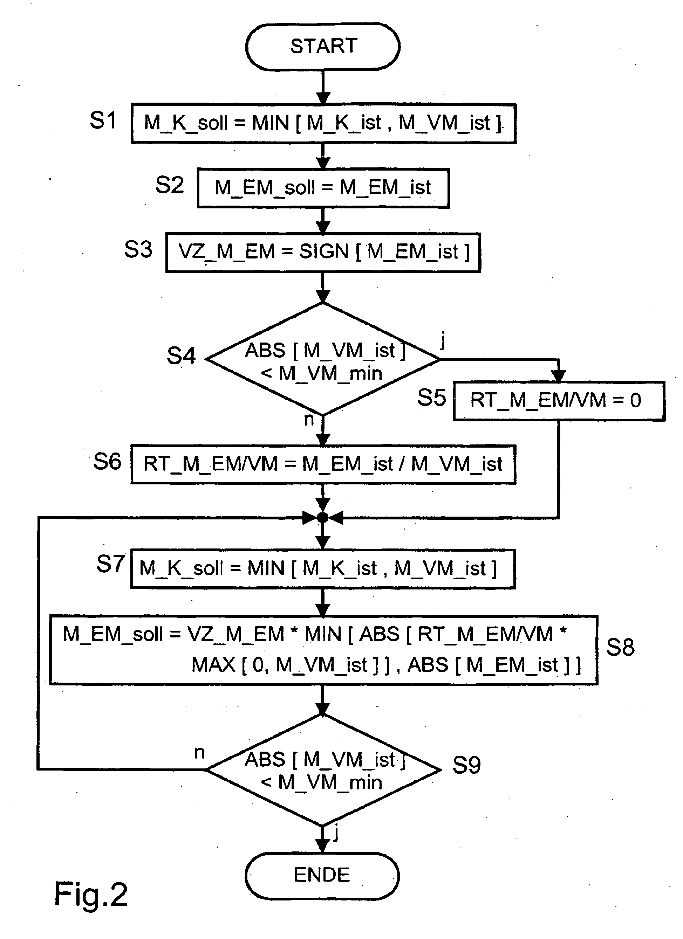

In dem Ablaufplan von Fig. 2 ist beispielhaft die Steuerung der Überbrückungskupplung 12 und der Elektromaschine 3 über die Ermittlung der entsprechenden Sollwerte der Drehmomente (M_K_soll und M_EM_soll) während des Drehmomentabbaus dargestellt. In den Programm- bzw. Verfahrensschritten S1 bis S6 wird die Initialisierung von Anfangswerten und bedarfsweise ein erster Steuerungsschritt zu Beginn des Verfahrens durchgeführt.

Im Schritt S1 wird das Sollmoment M_K_soll der Überbrückungskupplung 12 auf den Minimalwert aus dem Istmoment M_K_ist der Überbrückungskupplung 12 und dem Istmoment M_VM_ist des Verbrennungsmotors 2 gesetzt. Dies bedeutet, dass das Kupplungsmoment M_K_soll bei mit Überanpressung geschlossener Überbrückungskupplung M_K_ist > M_VM_ist auf das Istmoment M_VM_ist des Verbrennungsmotors abgesenkt und damit bis an die Schlupfgrenze geöffnet wird.

Mit dem Schritt S2 wird das Sollmoment M_EM_soll der Elektromaschine 3 initialisiert. Im Schritt S3 wird das später zu verwendende Vorzeichen SIGN des Istmomentes M_EM_ist der Elektromaschine 3 zu Beginn des Drehmomentabbaus bestimmt, also ermittelt, ob die Elektromaschine zu diesem Zeitpunkt als Motor oder als Generator betrieben wird.

Mit dem Schritt S4 wird geprüft, ob sich das Istmoment M_VM_ist des Verbrennungsmotors 2 innerhalb einer Toleranzschwelle in der Nähe eines Nullmomentes befindet. Im positiven Fall wird im Schritt S5 das Drehmomentenverhältnis RT_M_EM/VM der Elektromaschine 3 und des Verbrennungsmotors 2 gleich Null gesetzt, um eine Division mit Null zu vermeiden.

Im negativen Fall wird das Drehmomentenverhältnis RT_M_EM/VM im Schritt S6 aus den Istwerten der Drehmomente (M_EM_ist und M_VM_ist) zu Beginn des Drehmomentabbaus durch Division berechnet.

Mit dem Schritt S7 wird das Sollmoment M_K_soll der Überbrückungskupplung 12 auf den Minimalwert aus den Istmomenten (M_K_ist und M_VM_ist) der Überbrückungskupplung 12 und des Verbrennungsmotors 2 gesetzt. Hierdurch wird im Fall einer zuvor geschlossenen Überbrückungskupplung 12 erreicht, dass die Überbrückungskupplung 12 nach der zuvor beschriebenen Absenkung weiter proportional zu dem absinkenden Istmoment M_VM_ist des Verbrennungsmotors 2, also an der Schlupfgrenze, geöffnet wird.

Bei anfänglich kleinerem Istmoment M_K_ist, also bei zumindest teilweise geöffneter Überbrückungskupplung 12, wird das Sollmoment M_K_soll so lange beibehalten, bis die Überbrückungskupplung 12 durch das absinkende Drehmoment M_VM_ist des Verbrennungsmotors 2 an die Schlupfgrenze (M_K_ist = M_VM_ist) gerät. Ab da wird wie in dem anderen Fall das Sollmoment M_K_soll, also das übertragbare Drehmoment, der Überbrückungskupplung 12 proportional zu dem Istmoment M_VM_ist des Verbrennungsmotors 2 reduziert.

In dem Schritt S8 wird durch die Bestimmung des Sollmomentes M_EM_soll der Elektromaschine 3 das von dieser im Motorbetrieb abgegebene oder im Generatorbetrieb aufgenommene Drehmoment M_EM_ist proportional zu dem Istmoment M_VM_ist abgebaut. Hierbei wird durch die Formel

$$\text{M\_EM\_soll} = \text{VZ\_M\_EM} * \text{MIN [ ABS [ RT\_M\_EM/VM } *$$
$$\text{MAX [ 0, M\_VM\_IST ] ]; ABS [M\_EM\_ist ] ]}$$

bewirkt, dass in der Nähe des Nullmomentes auftretende Drehmomentschwankungen des Verbrennungsmotors 2 bei der Elektromaschine 3 nicht zu einem Wechsel zwischen Motor- und Generatorbetrieb führen, durch die Lastwechselstöße auftreten und Drehschwingungen angeregt würden. Dabei steht der Ausdruck VZ_M_EM für das Vorzeichen des Drehmoments der Elektromaschine und ABS für den Absolutwert des nachfolgenden Terms.

Mit Schritt S9 wird geprüft, ob das Istmoment M_VM_ist des Verbrennungsmotors 2 innerhalb einer vorgegebenen Toleranzschwelle vollständig abgebaut ist. Im positiven Fall ist der Drehmomentabbau abgeschlossen. Im negativen Fall werden die Schritte S7 und S8 so lange durchgeführt, bis die Bedingung von Schritt S9 erfüllt ist.

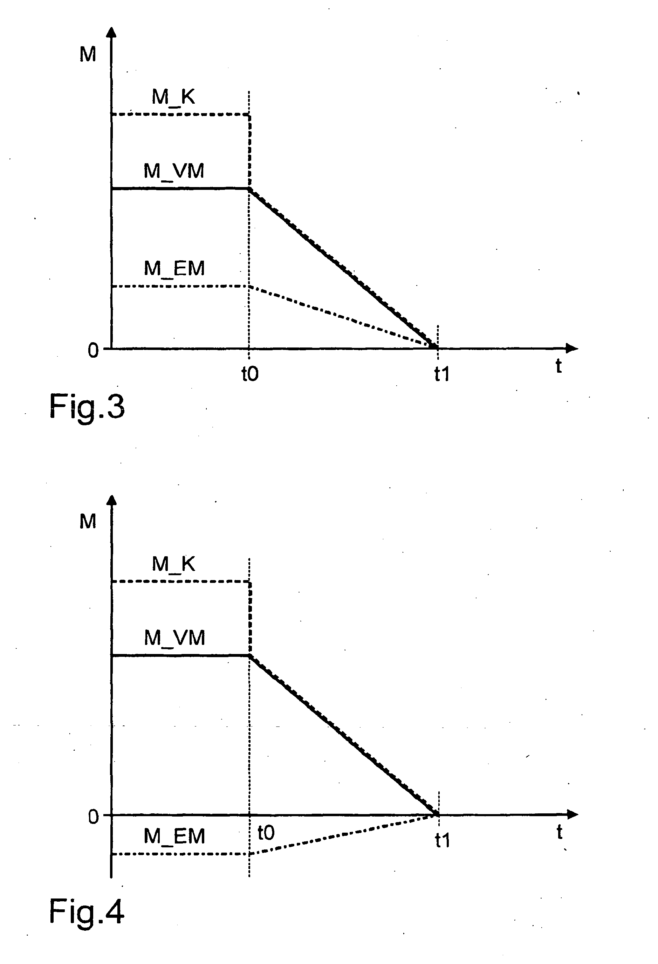

In Fig. 3 sind nun die Drehmomentverläufe für ein Anwendungsbeispiel dargestellt, bei dem vor dem Beginn des Drehmomentabbaus (t > t0) die Überbrückungskupplung 12 mit Überanpressung geschlossen ist (M_K > M_VM) und die Elektromaschine 3 als Motor betrieben wird (M_EM > 0). Zu Beginn des Drehmomentabbaus (t = t0) wird zunächst die Überbrückungskupplung 12 bis an die Schlupfgrenze geöffnet (M_K = M_VM). Nachfolgend werden die Drehmomente der Überbrückungskupplung (M_K) und der Elektromaschine (M_EM) proportional zu dem Drehmoment (M_VM) des Verbrennungsmotors 2 reduziert. Hierdurch erreichen alle Drehmomente (M_VM, M_K, M_EM) zum Zeitpunkt t1 gleichzeitig ihren Neutralwert. Da das zu Beginn des Drehmomentabbaus (t = t0) an dem Summierungsgetriebe 5, 15 bestehende Momentengleichgewicht bis zum Ende (t = t1) weitgehend beibehalten wird, treten an dem Summierungsgetriebe 5, 15 keine nennenswerten Drehzahländerungen auf. Ebenso bildet das erfindungsgemäße Verfahren den schnellsten Weg des Drehmomentabbaus.

In Fig. 4 sind die Drehmomentverläufe für ein Anwendungsbeispiel dargestellt, das weitgehend identisch mit demjenigen gemäß Fig. 3 ist. Der einzige Unterschied besteht darin, dass die Elektromaschine 3 vor dem Beginn des Drehmomentabbaus (t > t0) als Generator betrieben wird (M_EM < 0). Nach dem Öffnen der Überbrückungskupplung 12 an die Schlupfgrenze (M_K = M_VM) werden die Drehmomente der Überbrückungskupplung 12 (M_K) und der Elektromaschine 3 (M_EM) wiederum proportional zu dem Drehmoment (M_VM) des Verbrennungsmotors 2 bis auf Null reduziert.

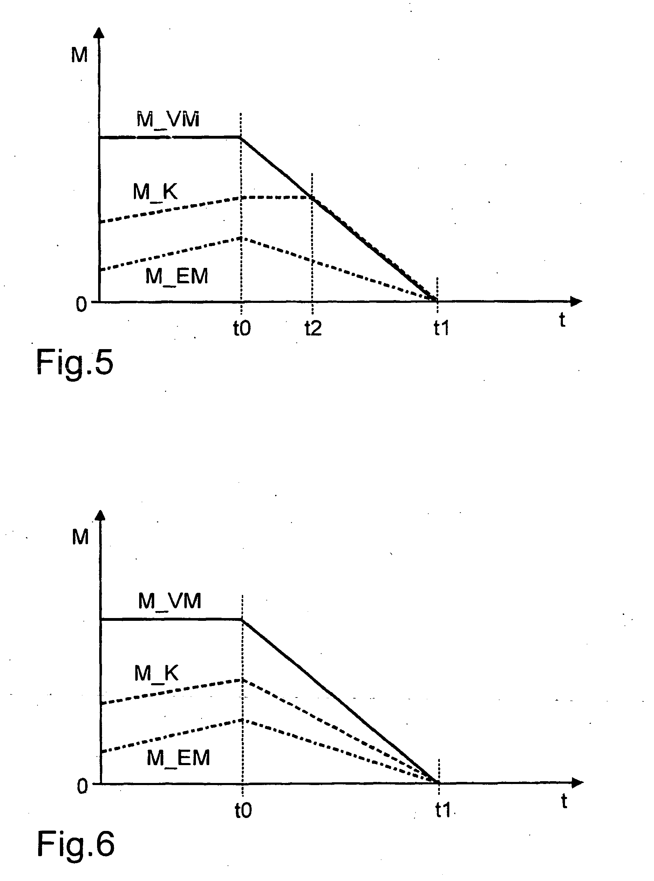

In Fig. 5 und Fig. 6 sind dagegen die Drehmomentverläufe dargestellt, bei dem sich das betreffende Kraftfahrzeug zum Zeitpunkt der Schaltungsanforderung in einem Anfahrvorgang befindet, die Elektromaschine 3 als Motor (M_EM > 0) betrieben wird, und die Überbrückungskupplung 12 sich im Schlupfzustand (M_K < M_VM) befindet und im Schließen begriffen ist.

In einer ersten Verfahrensvariante gemäß Fig. 5 wird die Überbrückungskupplung 12 mit dem Beginn des Drehmomentabbaus (t = t0) auf dem betreffenden übertragbaren Drehmoment M_K gehalten, bis diese im Zeitpunkt t = t2 durch das absinkende Drehmoment des Verbrennungsmotors 2 an die Schlupfgrenze gerät. Nachfolgend wird die Überbrückungskupplung 12 an der Schlupfgrenze (M_K = M_VM) gehalten und damit proportional zu dem absinkenden Drehmoment M_VM des Verbrennungsmotors 2 geöffnet. Das Drehmoment (M_EM) der Elektromaschine 3 wird dagegen von Anfang an proportional zu dem Drehmoment (M_VM) des Verbrennungsmotors 2 bis auf Null reduziert. Durch das Konstanthalten des übertragbaren Drehmomentes M_K der Überbrückungskupplung in der Zeitspanne t = t0 bis t = t2 wird zwar ein geringes Ungleichgewicht in dem Summierungsgetriebe 5 verursacht, jedoch die Schlupfphase der Überbrückungskupplung 12 verkürzt.

In einer zweiten Verfahrensvariante gemäß Fig. 6 wird unter gleichen Betriebsbedingungen wie in dem Beispiel nach Fig. 5 die Überbrückungskupplung 12 von Beginn des Drehmomentabbaus an (t = t0) proportional zu dem Drehmoment (M_VM) des Verbrennungsmotors 2 geöffnet. Hierdurch wird ein Ungleichgewicht in dem Summierungsgetriebe 5 vermieden, jedoch die Schlupfphase der Überbrückungskupplung 12 verlängert.

Unabhängig von den in den Figuren 7 und 8 gezeigten Ausführungsbeispielen erfasst die Erfindung auch die Verwendung des Verfahrens in Antriebssträngen mit allen anderen möglichen und unterschiedlichen Antriebskoppelungen zwischen dem Verbrennungsmotor 2, der Elektromaschine 3, dem Summierungsgetriebe 5, der Kupplung 12 und dem Getriebe 4, welches hier jedoch nicht gesondert dargestellt ist.

<u>Bezugszeichen</u>

| | |
|---|---|
| 1 | Antriebsstrang |
| 2 | Verbrennungsmotor |
| 3 | Elektromaschine |
| 4 | Getriebe, automatisiertes Schaltgetriebe |
| 5 | Summierungsgetriebe |
| 6 | (erstes) Eingangselement |
| 7 | (zweites) Eingangselement |
| 8 | Ausgangselement |
| 9 | Kurbelwelle |
| 10 | Rotor |
| 11 | Eingangswelle |
| 12 | Überbrückungskupplung |
| 13 | Sensor- und Steuerleitung |
| 14 | Steuergerät |

14.1 Sollwertgeber
14.2 Sollwertgeber
15 Planetengetriebe
16 Sonnenrad
17 Planetenträger
18 Planetenrad
19 Hohlrad
20 Schwungrad
21 Drehschwingungsdämpfer
22 Gehäuseteil
23 Richtungsfreilauf
24 Verbindungswelle

ABS Absolutwert

f (t) Zeitfunktion

G eingelegter Gang

M Drehmoment

M_EM Drehmoment von 3

M_EM_ist Istmoment von 3

M_EM_soll Sollmoment von 3

M_K (übertragbares) Drehmoment von 12

M_K_ist Istmoment von 12

M_K_soll Sollmoment von 12

M_VM Drehmoment von 2

M_VM_ist Istmoment von 2

M_VM_min Grenzwert von M_VM

M_VM_soll Sollmoment von 2

MAX Maximalwert

MIN Minimalwert

RT_M Drehmomentverhältnis

SIGN Vorzeichen

S1 - S9 Verfahrensschritt

t Zeit

t0 Zeitpunkt

t1 Zeitpunkt

t1 Zeitpunkt

v           Fahrgeschwindigkeit

VZ_M        Vorzeichen von Drehmoment

x_Fp        Fahrpedalstellung

**Patentansprüche**

1.  Verfahren zur Steuerung eines Kraftfahrzeug-Antriebsstrangs, der einen Verbrennungsmotor (2), eine Elektromaschine (3) und ein Getriebe (4) umfasst, die über ein Summierungsgetriebe (5, 15) mit zwei Eingangselementen (6, 7) und einem Ausgangselement (8) und über eine als Reibungskupplung ausgebildete Überbrückungskupplung (12) miteinander gekoppelt sind, indem das erste Eingangselement mit der Kurbelwelle (9) des Verbrennungsmotors (2), das zweite Eingangselement mit dem Rotor (10) der Elektromaschine (3) und das Ausgangselement (8) mit der Eingangswelle (11) des Getriebes (4) drehfest verbunden ist, und bei dem die Überbrückungskupplung (12) zwischen zwei Elementen des Summierungsgetriebes (5, 15) angeordnet ist, wobei vor einem Schaltvorgang die Drehmomente des Verbrennungsmotors (2) und der Elektromaschine (3) abgebaut werden sowie die Überbrückungskupplung (12) geöffnet wird, das Drehmoment (M_VM) des Verbrennungsmotors (2) nach einem vorab festgelegten Zeitverlauf (M_VM_soll = f (t)) reduziert wird, dass die Überbrückungskupplung (12), sofern diese zu Beginn des Drehmomentabbaus (t = t0) zumindest teilweise geschlossen ist, an die Schlupfgrenze gebracht und nachfolgend an der Schlupfgrenze proportional zu dem sinkenden Drehmoment (M_VM_ist) des Verbrennungsmotors (2) geöffnet wird, **dadurch gekennzeichnet dass** das Drehmoment (M_EM_soll) der Elektromaschine (3) im Verhältnis (M_EM_ist/ M_VM_ist) der Drehmomente zu Beginn des Drehmomentabbaus (t = t0) proportional zu dem Drehmoment (M_VM_ist) des Verbrennungsmotors (2) reduziert wird.

2.  Verfahren nach Anspruch 1, **dadurch gekennzeichnet, dass** bei vollständig geschlossener Überbrückungskupplung (12) zu Beginn des Drehmomentabbaus (t = t0) zunächst die Überbrückungskupplung (12) bis an die Schlupfgrenze geöffnet wird und nachfolgend die Drehmomente (M_VM, M_EM) des Verbrennungsmotors (2) und der Elektromaschine (3) abgebaut werden sowie die Überbrückungskupplung (12) weiter geöffnet wird.

3.  Verfahren nach Anspruch 1, **dadurch gekennzeichnet, dass** bei teilweise geschlossener Überbrückungskupplung (12) zu Beginn des Drehmomentabbaus (t = t0) zunächst das übertragbare Drehmoment (M_K) der Überbrückungskupplung (12) konstant gehalten wird, bis durch das sinkende Drehmoment (M_VM_ist) des Verbrennungsmotors (2) die Schlupfgrenze erreicht wird, und dass die Überbrückungskupplung (12) nachfolgend an der Schlupfgrenze proportional zu dem Drehmoment (M_VM_ist) des Verbrennungsmotors (2) geöffnet wird.

4.  Verfahren nach Anspruch 1, **dadurch gekennzeichnet, dass** bei teilweise geschlossener Überbrückungskupplung (12) zu Beginn des Drehmomentabbaus (t = t0) das übertragbare Drehmoment (M_K) der Überbrückungskupplung (12) im Verhältnis (M_K_ist / M_VM_ist) zu Beginn des Drehmomentabbaus proportional zu dem Drehmoment (M_VM_ist) des Verbrennungsmotors durch Öffnen reduziert wird.

5.  Verfahren nach Anspruch 1, **dadurch gekennzeichnet, dass** bei vollständig geöffneter Überbrückungskupplung (12) zu Beginn des Drehmomentabbaus (t = t0) die Überbrückungskupplung (12) während des Drehmomentabbaus (t = t0 bis t = t1) in diesem Zustand verbleibt.

**Claims**

1.  Method for controlling a motor vehicle drive train which comprises an internal combustion engine (2), an electric machine (3) and a transmission (4) which are coupled to one another via a summing transmission (5, 15) with two input elements (6, 7) and with an output element (8) and via a lock-up clutch (12) designed as a friction clutch, in which the first input element is connected fixedly in terms of rotation to the crankshaft (9) of the internal combustion engine (2), the second input element to the rotor (10) of the electric machine (3) and the output element (8) to the input shaft (11) of the transmission (4), and in which the lock-up clutch (12) is arranged between two elements of the summing transmission (5, 15), prior to a shift operation the torques of the internal combustion engine (2) and of the electric machine (3) being reduced and the lock-up clutch (12) being opened, the torque (M_VM) of the internal combustion engine (2) being reduced according to a predetermined time profile (M_VM_des=f(t)), and the lock-up clutch (12), in so far as it is at least partially closed at the commencement of the torque reduction (t=t0), being brought to the slip limit and thereafter, at the slip limit, being opened proportionally to the decreasing torque (M_VM_act_) of the internal combustion engine (2), **characterized in that** the torque (M_EM_des) of the electric machine (3) is reduced proportionally to the torque (M_VM_act) of the internal combustion engine (2) in the ratio (M_EM_act/M_VM_act) of the torque for the commencement of the torque reduction (t=t0).

**2.** Method according to Claim 1, **characterized in that** with a lock-up clutch (12) completely closed, and for the commencement of the torque reduction (t=t0), first the lock-up clutch (12) is opened up to the slip limit and thereafter the torques (M_VM, M_EM) of the internal combustion engine (2) and of the electric machine (3) are reduced and also the lock-up clutch (12) is opened further.

**3.** Method according to Claim 1, **characterized in that,** with the lock-up clutch (12) partially closed, for the commencement of the torque reduction (t=t0), first the transmittable torque (M_K) of the lock-up clutch (12) is kept constant, until the slip limit is reached as a result of the decreasing torque (M_VM_act) of the internal combustion engine (2), and **in that**, thereafter, the lock-up clutch (12) is opened at the slip limit proportionally to the torque (M_VM_act) of the internal combustion engine (2).

**4.** Method according to Claim 1, **characterized in that,** with the lock-up clutch (12) partially closed, and for the commencement of the torque reduction (t=t0) the transmittable torque (M_K) of the lock-up clutch (12) is reduced, by opening, proportionally to the torque (M_VM_act) of the internal combustion engine in the ratio (M_K_act/M_VM_act) for the commencement of the torque reduction.

**5.** Method according to Claim 1, **characterized in that,** with a lock-up clutch (12) completely open, for the commencement of the torque reduction (t=t0) the lock-up clutch (12) remains in this state during the torque reduction (t=t0 to t=t1).

## Revendications

**1.** Procédé pour commander une chaîne motrice de véhicule automobile, laquelle englobe un moteur à combustion interne (2), une machine électrique(3) et une boîte de vitesses (4), lesquels sont accouplés entre eux par le biais d'un engrenage combineur (5, 15) comprenant deux éléments d'entrée (6, 7) et un élément de sortie (8) et par le biais d'un accouplement de pontage (12) réalisé sous la forme d'un accouplement à friction, en ce que le premier élément d'entrée est relié en rotation solidaire avec le vilebrequin (9) du moteur à combustion interne (2), le deuxième élément d'entrée avec le rotor (10) de la machine électrique (3) et l'élément de sortie (8) avec l'arbre d'entrée (11) de la boîte de vitesses (4), et selon lequel l'accouplement de pontage (12) est disposé entre deux éléments de l'engrenage combineur (5, 15), les couples du moteur à combustion interne (2) et de la machine électrique (3) étant réduits et l'accouplement de pontage (12) étant ouvert avant une opération de changement de rapport, le couple (M_VM) du moteur à combustion interne (2) étant réduit après une période (M_VM_soll = f(t)) préalablement définie, l'accouplement de pontage (12), sous réserve qu'il soit au moins partiellement fermé au début de la réduction du couple (t = t0), étant amené à la limite du patinage et ensuite ouvert à la limite du patinage proportionnellement au couple décroissant (M_VM_ist) du moteur à combustion interne (2), **caractérisé en ce que** le couple (M_EM_soll) de la machine électrique (3) est réduit proportionnellement au couple (M_VM_ist) du moteur à combustion interne (2) dans un rapport (M_EM_ist / M_VM_ist) entre les couples au début de la réduction du couple (t = t0).

**2.** Procédé selon la revendication 1, **caractérisé en ce que** si l'accouplement de pontage (12) est entièrement fermé au début de la réduction du couple (t = t0), l'accouplement de pontage (12) est tout d'abord ouvert jusqu'à la limite du patinage et les couples (M_VM, M_EM) du moteur à combustion interne (2) et de la machine électrique (3) sont ensuite réduits et l'ouverture de l'accouplement de pontage (12) se poursuit.

**3.** Procédé selon la revendication 1, **caractérisé en ce que** si l'accouplement de pontage (12) est partiellement fermé au début de la réduction du couple (t = t0), le couple transmissible (M_K) de l'accouplement de pontage (12) est tout d'abord maintenu constant jusqu'à atteindre la limite de patinage par le couple décroissant (M_VM_ist) du moteur à combustion interne (2), et que l'accouplement de pontage (12) est ensuite ouvert à la limite de patinage proportionnellement au couple (M_VM_ist) du moteur à combustion interne (2).

**4.** Procédé selon la revendication 1, **caractérisé en ce que** si l'accouplement de pontage (12) est partiellement fermé au début de la réduction du couple (t = t0), le couple transmissible (M_K) de l'accouplement de pontage (12) est réduit par ouverture proportionnellement au couple (M_VM_ist) du moteur à combustion interne dans un rapport (M_K_ist / M_VM_ist) au début de la réduction du couple.

**5.** Procédé selon la revendication 1, **caractérisé en ce que** si l'accouplement de pontage (12) est complètement ouvert au début de la réduction du couple (t = t0), l'accouplement de pontage (12) demeure dans cet état pendant la réduction du couple (t = t0 à t = t1).

x_Fp

G

v

14.1

14

M_VM_ist

14.2

M_VM_soll

M_K_soll

M_EM_soll

12

3

2

5

4

Fig.1

START

S1 | $M\_K\_soll = MIN \ [ \ M\_K\_ist \ , \ M\_VM\_ist \ ]$

S2 | $M\_EM\_soll = M\_EM\_ist$

S3 | $VZ\_M\_EM = SIGN \ [ \ M\_EM\_ist \ ]$

S4 | $ABS \ [ \ M\_VM\_ist \ ] < M\_VM\_min$

j

S5 | $RT\_M\_EM/VM = 0$

n

S6 | $RT\_M\_EM/VM = M\_EM\_ist \ / \ M\_VM\_ist$

S7 | $M\_K\_soll = MIN \ [ \ M\_K\_ist \ , \ M\_VM\_ist \ ]$

$M\_EM\_soll = VZ\_M\_EM \ * \ MIN \ [ \ ABS \ [ \ RT\_M\_EM/VM \ * \ MAX \ [ \ 0, \ M\_VM\_ist \ ] \ ] \ , \ ABS \ [ \ M\_EM\_ist \ ] \ ]$ | S8

n | $ABS \ [ \ M\_VM\_ist \ ] < M\_VM\_min$ | S9

j

ENDE

Fig.2

Fig.3

Fig.4

Fig.5

Fig.6

Fig.7

Fig.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19934696 A1
- DE 10152471 A1

- EP 1090792 A